# EUROPEAN PATENT APPLICATION

(11) **EP 3 034 145 A1**
(43) Date of publication of application: **22.06.2016**
(21) Application number: 14836303.9
(22) Date of filing: 10.06.2014
(51) Int. Cl.: B01D 24/10, B01D 27/02, B01D 39/00, C02F 1/28

(54) **FILTER MODULE FOR A DEVICE FOR PURIFYING LIQUIDS (VARIANTS)**

(30) Priority: 12.08.2013 RU 2013137689
(71) Applicant: Aquaphor Production Corporation (Aquaphor Production Corp.), St.Petersburg 197110 (RU)
(72) Inventor: SHMIDT, Joseph Lvovich, New York 10069 (US); KUZMIN, Alexei Leonidovich, St. Petersburg 198215 (RU); BAIGOZIN, Denis Vladislavovich, St. Petersburg 192177 (RU)
(74) Representative: Szabo, Zsolt
(86) International application number: PCT/RU2014/000425
(87) International publication number: WO 2015/023210

(57) **Abstract**

The invention relates to filter devices for purifying liquids, intended for the additional purification of mains water and other liquids for domestic use. A filter module (variants) for a device for purifying liquids consists of two working zones and at least one retaining means. A first working zone is provided with openings for the ingress of liquid and the egress of air. A second working zone is filled with a filler and is provided with at least one outlet opening in the base. The module is assembled with a third working zone containing at least one type of filler. According to a second variant, the first working zone of the filter module contains a filler. Technical result: a filter module with increased functional capabilities, providing effective water purification and the subsequent introduction of mineral substances into the water either being or having been filtered. (Figure 1)

## Description

### FIELD OF THE INVENTION

The claimed group of inventions (variants) relate to filter devices for purification of liquids, designed to provide secondary purification of a faucet water and other household liquids.

### BACKGROUND

The prior art structures for liquid purification pitcher-type devices usually include three members: a filterable water container in the form of a funnel, and a filtered water container in the form of a pitcher, said containers being in communication with each other by means of filtration. A liquid is poured into the filterable container, and water subjected to gravitational forces flows through a filtering means and is collected in the filtered water container. At the same time, as is known, the filtering means consists of two working zones - an upper one and a lower one. The upper working zone is a lid with filterable liquid inlet and air outlet holes, said lid being usually filled with a filtering medium. An activated carbon is usually used as filtering media in such filtering means.

Known is a filter assembly of US 8,216,465 (IPC B01D 27/02, C02F 1/00, published on 10.07.2012). This assembly consists of a cup with a thread connection in a top potion thereof, a replaceable filter cartridge (insert), and a lid with a thread connection in a bottom potion thereof for assembling and disassembling the assembly, wherein the filter cartridge is a sealed unit made of a water-permeable material, said unit being insertable into the cup and secured within the assembly by an upper support structure and a lower support structures. The support structures are water-permeable webs deigned to secure the filter cartridge in the cup, which can be disassembled, of the filter assembly. After a lapse of resource, the filter cartridge (insert) can be substituted for a novel one while the cup and lid are reusable, which is cost effective for a user. The disadvantage of this solution is the restricted purpose of the filter assembly that does not provide saturation of the filterable water with mineral matters. In addition, the filter assembly of US 8,216,465 has the thread connection being a place for collection of harmful microorganisms which can infiltrate into the filtered water via a gap between the wall of the insert and the wall of the assembly cup.

Known in the art is a structure for "A filtering device" of US 7,695,615 (IPC B01D 24/10, C02F 1/18, published on 13.04.2010). This solution is the closest one in the technical essence to the present invention and is taken as a prototype. The filtering device consists of two working zones, wherein a first working zone is made with liquid inlet and air outlet holes while a second working zone is filled with a filtering material and is provided with at least one outlet hole in a base of a fixing means.

The disadvantage of the device of US 7,695,615 is the restriction with respect to use in regions with different properties of source water, because this device can improve only organoleptic parameters of the water and remove dissolved organic substances.

### DISCLOSURE OF THE INVENTION

It is an object of the group of inventions (variants) to provide a filtering module that makes it possible to extend its performance characteristics and that of a liquid purification device, respectively. The structure of new filtering module according to the claimed group of inventions allows saturation of the filterable water with mineral matters useful for a human body.

The technical result of the group of inventions is improvement in the functionality of the filtering module to provide effective purification of water followed by introduction of mineral matters into the filterable and filtered water.

Said object and the required technical result in use of the invention are accomplished by that, in a first embodiment of the invention, a filtering module of a liquid purification device consists of two working zones and at least one fixing means, where a first working zone is made with liquid inlet and air outlet holes while a second working zone is filled with a filler and is provided with at least one outlet hole in a base where, according to the invention, the module is embodied in assembly with a third working zone comprising at least one type of the filler and arranged downstream of the second working zone so as to provide a contact of at least a portion of a treatable liquid with the filler of the third working zone and retain properties of the filler of the third working zone during a service life of the module, wherein the third working zone consists of upper and lower parts, where the lower part is filled with at least one type of the filler, where an outer surface of a base of the second working zone and an outer surface of the upper part of the third working zone, respectively, have at least one portion at a center of said surfaces, said portion being designed to connect the second working zone to the third working zone, where a cavity in the form of a horizontally oriented channel having a variable shape and size is formed between the outer surface of the base of the second working zone and an outer surface of the upper part of the third working zone; wherein the lower part of the third working zone is embodied, for example, in the form of a housing having a complicated configuration with an inner space embodied in the form of at least one sector of a predetermined shape, wherein a vertical wall and a base of a sector have liquid outlet holes, wherein the inner space of at least one sector comprises at least two types of fillers being a system of fillers arranged layer-by-layer, for example, horizontally and/or vertically, with a predetermined thickness of each layer, wherein granulated and/or powder and/or composite materials are used as the filler; where the upper part of the third working zone is embodied, for example, in the form of a lid with liquid inlet holes, where the lower part of the third working zone is connected to the upper part of the third working zone by a fastening means, wherein the fastening means presents a number n of fastening members arranged on the lower part of the third working zone and a respective number of holes arranged in the upper part of the third working zone where the fastening members are introduced in and which together form the fastening means of the lower part and the upper part of the third working zone; where the third working zone is connected to the second working zone at a center to form a gap of a variable shape and size between the second and third working zones, where the third working zone is embodied, for example, in the form of a housing having a complicated configuration with an inner space embodied in the form of at least one sector of a predetermined shape, wherein a vertical wall and a base of a sector have liquid outlet holes, wherein the inner space of at least one sector comprises at least two types of fillers being a system of fillers arranged layer-by-layer, for example, horizontally and/or vertically, with a predetermined thickness of each layer, wherein granulated and/or powder and/or composite materials are used as the filler; where at least the second and the third working zones are arranged within one housing, wherein the third working zone is separated from the second working zone by a fixing means for a filler and consists of upper and lower parts, where the lower part of the third working zone is filled with at least one type of the filler while the upper part of the third working zone is a cavity of a variable shape and size, not filled with the filler, wherein the third working zone is embodied in a complicated configuration with an inner space embodied in the form of at least one sector of a predetermined shape, wherein a vertical wall and a base of a sector have liquid outlet holes, where the inner space of at least one sector comprises at least two types of fillers being a system of fillers arranged layer-by-layer, for example, horizontally and/or vertically, with a predetermined thickness of each layer, wherein granulated and/or powder and/or composite materials are used as the filler; where the module consisting of the first, second and third working zones is integral; where the third working zone in the module is a replaceable working zone; where the first working zone further comprises a filler, wherein a granulated material, predominantly an ion-exchange resin or a mixture of an ion-exchange resin and an activated carbon, is used as the filler of the first working zone, where a mixture of fibrous and granulated materials is used as the filler in the second working zone, wherein ion-exchange fiber-based sorbents are used as the fibrous material while the activated carbon or predominantly the mixture of the activated carbon and the ion-exchange resin is used as the granulated material; where granulated and/or powder and/or composite materials are used as the at least one type of the filler in the third working zone, wherein a mineralizing material is predominantly used as the granulated and/or powder material, where a mixture of the mineralizing material and the activated carbon is used as the granulated or powder material, wherein magnesium and/or calcium compound-based materials, for example, dolomite, calcite, magnesium carbonate, calcium carbonate, magnesium silicate, magnesium chloride, magnesium oxide, mixtures thereof or a mixture comprising a magnesium/calcium oxide - of natural origin or produced by heat treatment of natural materials - or metal magnesium and/or calcium and alloys thereof, are used as the mineralizing material, where, for example, a carbon block is used as the composite material, where the fillers of the first, second and third working zones do not cooperate with each other.

The claimed module according to the first embodiment is the filtering module with three working zones, where two - the second and third ones - are active while the first working zone is embodied with liquid inlet and air outlet holes and is not filled with any filler. The structure of the claimed filtering module is characterized in that is provides effective purification of water followed by saturation of the filterable water with mineral matters necessary for a human body. In a particular embodiment, the first working zone can further comprise a filler.

Said object and the required technical result in use of the invention are accomplished by that, in a second embodiment of the invention, a filtering module of a liquid purification device consists of two working zones and at least one fixing means, where a first working zone is made with liquid inlet and air outlet holes while a second working zone is filled with a filler and is provided with at least one outlet hole in a base where, according to the invention, the module is embodied in assembly with a third working zone comprising at least one type of the filler and arranged downstream of the second working zone so as to provide a contact of at least a portion of a treatable liquid with the filler of the third working zone and retain properties of the filler in the third working zone during a service life of the module, where the first working zone comprises a filler, wherein the third working zone consists of upper and lower parts, where the lower part is filled with at least one type of the filler, where an outer surface of a base of the second working zone and an outer surface of the upper part of the third working zone, respectively, have at least one portion at a center of said surfaces, said portion being designed to connect the second working zone to the third working zone, wherein a cavity in the form of a horizontally oriented channel having a variable shape and size is formed between the outer surface of the base of the second working zone and an outer surface of the upper part of the third working zone; wherein the lower part of the third working zone is embodied, for example, in the form of a housing having a complicated configuration with an inner space embodied in the form of at least one sector of a predetermined shape, wherein a vertical wall and a base of a sector have liquid outlet holes, wherein the inner space of at least one sector comprises at least two types of fillers being a system of fillers arranged layer-by-layer, for example, horizontally and/or vertically, with a predetermined thickness of each layer, wherein granulated and/or powder and/or composite materials are used as the filler; where the upper part of the third working zone is embodied, for example, in the form of a lid with liquid inlet and outlet holes, where the lower part of the third working zone is connected to the upper part of the third working zone by a fastening means, wherein the fastening means presents a number n of fastening members arranged on the lower part of the third working zone and a respective number of holes arranged in the upper part of the third working zone where the fastening members are introduced in and which together form the fastening means of the lower part and the upper part of the third working zone; where the third working zone is connected to the second working zone at a center to form a gap of a variable shape and size between the second and third working zones, where an inner space of at least one sector comprises at least two types of fillers being a system of fillers arranged layer-by-layer, for example, horizontally and/or vertically, with a predetermined thickness of each layer, wherein granulated and/or powder and/or composite materials are used as the filler; where at least the second and third working zones are arranged in one housing, wherein the third working zone is separated from the second working zone by a fixing means for a filler and consists of upper and lower parts, where the lower part of the third working zone is filled with at least one type of the filler while the upper part of the third working zone is a cavity of a variable shape and size, not filled with the filler, wherein the third working zone is embodied in a complicated configuration with an inner space embodied in the form of at least one sector of a predetermined shape, wherein a vertical wall and a base of a sector have liquid outlet holes, wherein the inner space of at least one sector comprises at least two types of fillers being a system of fillers arranged layer-by-layer, for example, horizontally and/or vertically, with a predetermined thickness of each layer, wherein granulated and/or powder and/or composite materials are used as the filler; where the module consisting of the first, second and third working zones is integral; where the third working zone in the module is a replaceable working zone, a granulated material, predominantly an ion-exchange resin or a mixture of an ion-exchange resin and an activated carbon, is used as the filler of the first working zone, where a mixture of fibrous and granulated materials is used as the filler in the second working zone, wherein ion-exchange fiber-based sorbents are used as the fibrous material while the activated carbon or predominantly the mixture of the activated carbon and the ion-exchange resin is used as the granulated material; where granulated and/or powder and/or composite materials are used as the at least one type of the filler in the third working zone, wherein a mineralizing material is predominantly used as the granulated and/or powder material, where a mixture of the mineralizing material and the activated carbon is used as the granulated or powder material, wherein magnesium and/or calcium compound-based materials, for example, dolomite, calcite, magnesium carbonate, calcium carbonate, magnesium silicate, magnesium chloride, magnesium oxide, mixtures thereof or a mixture comprising a magnesium/calcium oxide - of natural origin or produced by heat treatment of natural materials - or metal magnesium and/or calcium and alloys thereof, are used as the mineralizing material, where, for example, a carbon block is used as the composite material, where the fillers of the first, second and third working zones do not cooperate with each other.

The claimed invention according to the second embodiment also is the filtering module with three working zones, where all three working zones are active.

The filtering module can be used both as a component unit of the liquid purification device and as an independent unit.

The structural embodiment of the filtering module gives a sufficient time of contacting the filler in the third working zone for the treatable as well as treated water, which leads to improvement in general mineralization of the treated water throughout the use (service) life of the filtering module, water softening at maintenance of the water purification effectiveness, for example, in removal of chlorine, organic compounds and heavy metals from water, and provides a predetermined water filtration mode.

It is the essence of the claimed group of inventions to provide a structural embodiment of the filtering module with the third working zone comprising at least one type of the filler, which zone can be embodied so as to provide a contact of at least a portion of the treatable liquid with the filler of the third working zone and retain properties of the filler of the third working zone during the service life of the module; exactly, said zone can consist of upper and lower parts, where the lower part is filled with the filler, wherein the third working zone can be is connected to the second working zone or separated from the second working zone by the fixing means and be within one housing with the second working zone or consist of one part, filled with the filler. In each of said embodiments, fillers which fill the working zones are not cooperate with each other because there is the cavity or the gap between the second and third working zones, said cavity being no filled with the filler while said cavity and gap provide ventilation conditions so as to retain properties of a readily soluble filler in the third working zone during the service life of the module.

### BRIEF DESCRIPTION OF THE DRAWINGS

The essence of the claimed group of inventions is explained by the drawings in more detail, wherein:
Fig. 1 illustrates a general cross-sectional view and a bottom view of a filtering module according to a first embodiment having a cavity in the form of a horizontally oriented channel between an outer surface of a base of a second working zone and an outer surface of an upper part of a third working zone;
Fig. 2 illustrates the general cross-sectional view and the bottom view of the filtering module according to the first embodiment having a gap formed between the second and third working zones;
Fig. 3 illustrates the general cross-sectional view and the bottom view of the filtering module according to the first embodiment where the second and third working zones are arranged in one housing;
Fig. 4 illustrates a general cross-sectional view and a bottom view of a filtering module according to a second embodiment having a cavity in the form of a horizontally oriented channel between an outer surface of a base of a second working zone and an outer surface of an upper part of a third working zone;
Fig. 5 illustrates the general cross-sectional view and the bottom view of the filtering module according to the second embodiment having a gap formed between the second and third working zones;
Fig. 6 illustrates the general cross-sectional view and the bottom view of the filtering module according to the second embodiment where the second and third working zones are arranged in one housing;
Fig. 7 illustrates a top view of the third working zone consisting of upper and lower parts;
Fig. 8 illustrates an axonometric view of the disassembled third working zone consisting of the upper and lower parts;
Fig. 9 illustrates an axonometric cross-sectional view of the filtering module according to the second embodiment having a cavity in the form of a horizontally oriented channel between the outer surface of the base of the second working zone and the outer surface of the upper part of the third working zone;
Fig. 10 illustrates a general cross-sectional view of a liquid purification device with the filtering module according to the second embodiment.

### IMPLEMENTATION OF THE INVENTION

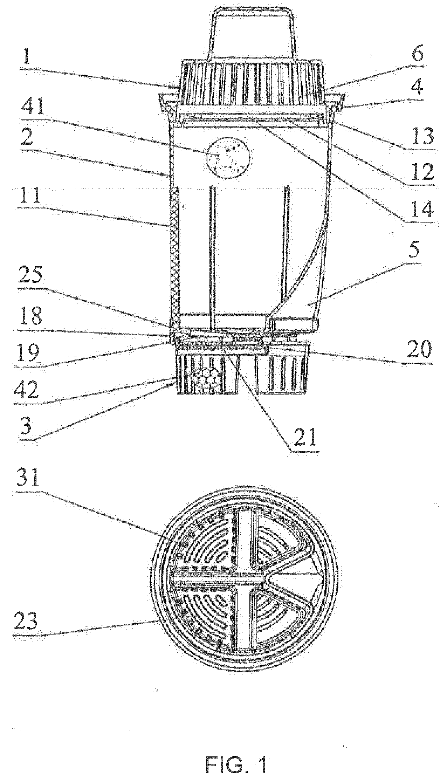

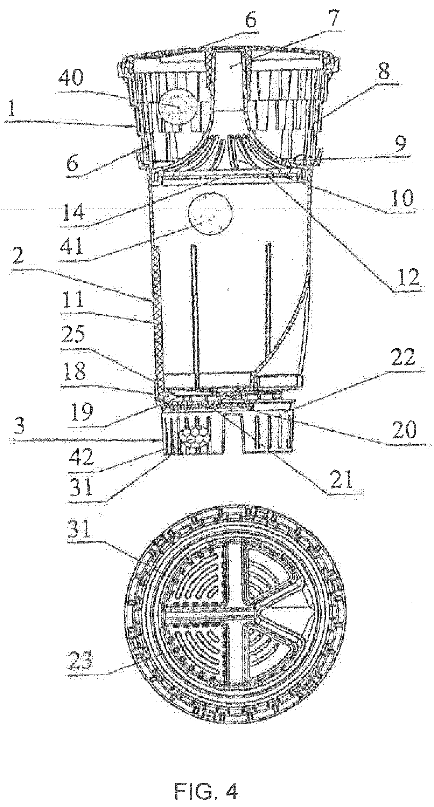

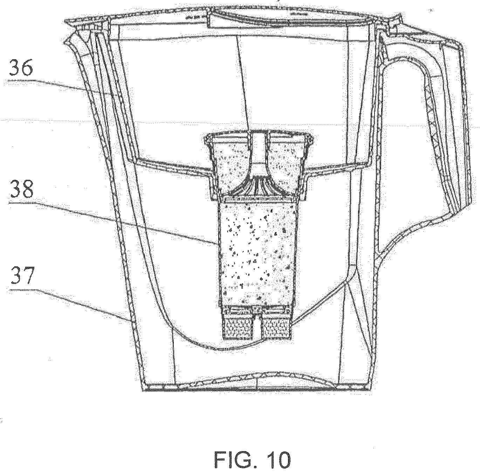

A filtering module according to a first embodiment (Figs. 1, 2, 3) and a second embodiment (Figs. 4, 5, 6) consists of a first working zone 1, a second working zone 2 and a third working zone 3 (Figs. 1, 4) embodied with inner spaces filled with fillers (in the first embodiment the first working zone 1 can be further filled with a filler) and arranged, for example, along the same axis, wherein the module is provided with at least a cuff 4 (Fig. 1) in order to improve the reliability of fixing and sealing the module within a filterable liquid container 36 in the form of a funnel (Fig. 10).

The first working zone 1 of the filtering module according to the first embodiment (Fig. 1) is provided with at least side liquid inlet holes 6 and side air outlet holes (Fig. 1). An outer shape of the first working zone 1 of the module is determined by a particular manufacturing technology and can be presented in different configurations with increase in a diameter (Fig. 1) towards the base or can have a constant flow cross-section (not shown in the Figure), which has no effect upon the claimed technical result.

The first working zone 1 of the filtering module according to the second embodiment is in the form of a container 8 (with decrease in a diameter (Fig. 4)) with an inner space filled with a filler 40 (Figs. 4, 5, 6), for example, a granulated material, predominantly an ion-exchange resin, wherein the container 8 (Fig. 4) can be provided, for example, with at least one channel 7 arranged at a center of this container 8 to provide free escape of air out of the module from the second working zone 2 through the inner space of the first working zone 1 (Fig. 4). A base 9 (Fig. 4) of the first working zone 1 can gradually merge into a wall (as determined by a particular technology) of said channel 7 that can be embodied with side filterable liquid outlet holes 10 opening into the second working zone 2 of the module (Figs. 4, 5, 6) or can have liquid outlet holes in the base of the first working zone 1 (not shown in the Figures).

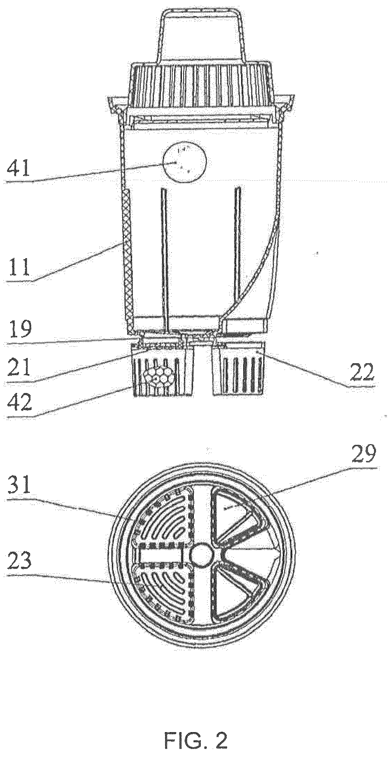

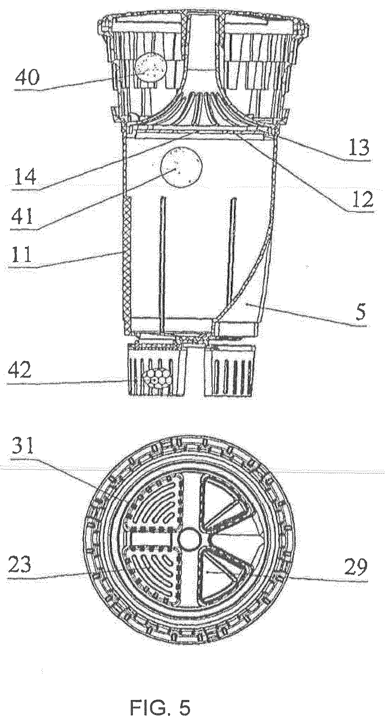

A shape of a wall of the second working zone 2 is determined technologically and can have different configurations, for example, can be embodied with a cut-out 5 (Fig. 1). The first and second working zones 1 and 2 are connected with each other, for example, by friction welding (Figs. 2, 5) or ultrasonic welding (Figs. 1, 4).

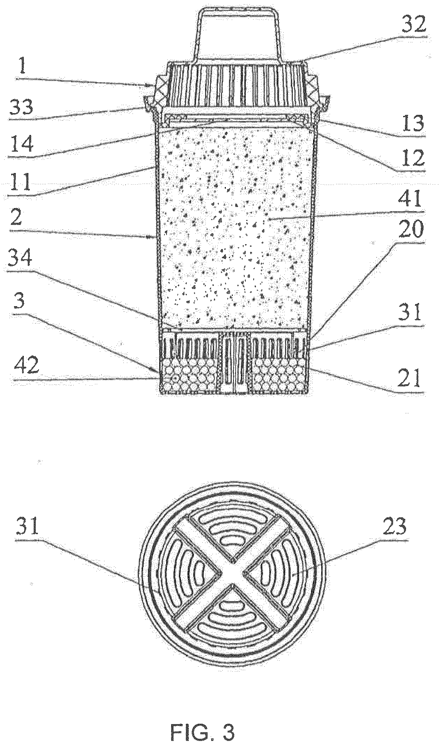

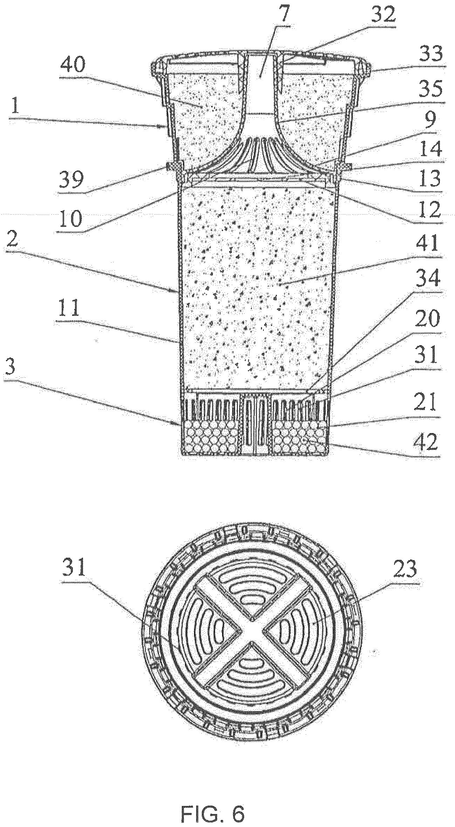

The second working zone 2 of the filtering module according to the first and second embodiments is a housing 11 with an inner space filled with a filler 41 (Figs. 2, 5). A water-permeable (synthetic or natural) polymeric material is used as a fixing means 12 for the filler 41 of the second working zone 2), said material being welded, for example, by thermal welding to a ring 13 which is welded, for example, by friction welding to an inner surface of said housing 11 (Fig. 5) or is inserted into the housing 11 without use of welding (Figs. 3,6), or the water-permeable polymeric material is welded to said housing 11 (not shown in the Figures). The fixing means 12 is arranged between the first and second working zones 1 and 2 of the filtering module according to the first or second embodiments (Figs. 1, v4) and is provided with at least one valve 14 provided for escape of air out of the second working zone 2 (Fig. 1) or into the channel 7 of the first working zone 1 (Fig. 4) or into the inner space of the first working zone 1 (Fig. 1) in progress of filtering the liquid. Various air outlet holes or slits can play the role of the valve 14 with respect to the air being accumulated between the 41 of the second working zone 2 and the fixing means 12 (Figs. 1, 4).

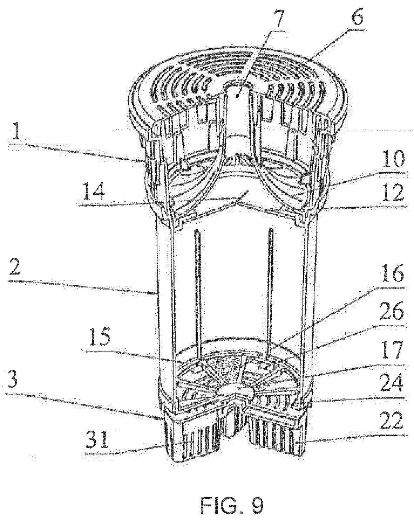

A shape of the housing 11 of the second working zone 2 has, for example, a variable flow cross-section, decreasing towards the base (Figs. 1,4) and being provided with filterable liquid outlet holes 15 (Fig. 9) and stiffening ribs 16 propagating from the wall of the housing to a portion 17 arranged at the center of the second working zone 2 and designed to connect the second working zone 2 to the third working zone 3 (Fig. 9). The outlet holes 15 of the second working zone 2 made, for example, of a water-permeable (synthetic or natural) polymeric material or, for example of a screen (Fig. 9) fulfill a function of a retention agent swelling in progress of filtering the filler 41 of the second working zone 2 of the filtering module according to the first and second embodiments (Figs. 1, 2, 4, 5).

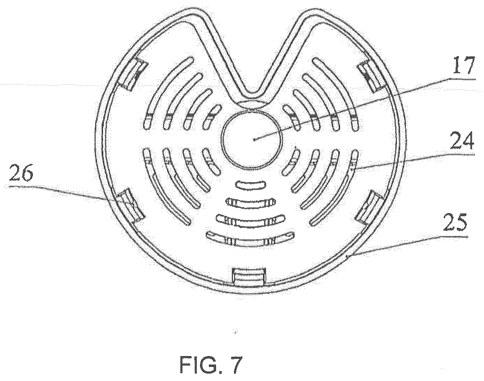

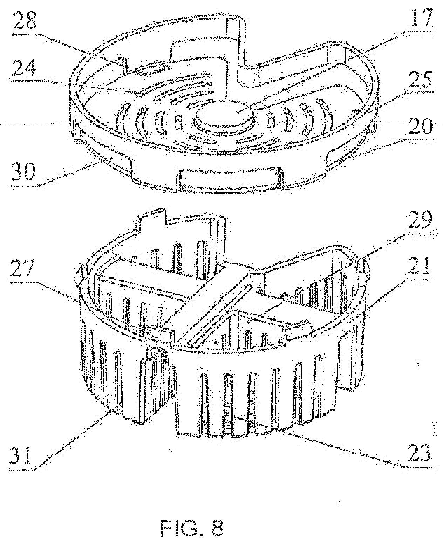

In a particular embodiment, the third working zone 3 (Figs. 7, 8) consists of an upper part 20 and a lower part 21 (Fig. 8), where the lower part 21 is embodied, for example, in the form of a housing 22 (Fig. 4,9) having a complicated configuration with at least one sector, for example, with sectors 29 of a predetermined shape, whose number is four (Figs. 2, 5, 8), wherein a vertical wall of each sector 29 has liquid outlet holes 31 and a base thereof has liquid outlet holes 23 Fig. 4). And the upper part 21 of the third working zone 3 (Fig. 8) is embodied, for example, in the form of a lid with filterable liquid inlet holes 24 (Fig. 7) arranged in a base of the lid at a center of which a portion 17 (Figs. 7, 8) designed to connect the second working zone 2 to the third working zone 3 and to outlet holes 30 (Fig. 8) is arranged. The outlet holes 30 (Fig. 8) are necessary to reduce the probability of forming dead-end air bubbles. The lower part 21 of the third working zone 3 is connected to the upper part 20 of the third working zone 3 by the fastening means 26 (Fig. 7) that presents a number n of fastening members 27 (Fig. 8) arranged on the lower part 21 of the third working zone 3 and a respective number of holes 28 arranged in the upper part 20 of the third working zone 3 (Fig. 8) where the fastening members 27 are introduced in and which together form the fastening means 26 of the lower part 21 and the upper part 20 of the third working zone 3 (Figs. 7, 8). At the same time the upper part 20 of the third working zone 3 is embodied, for example, with a cuff 25 having outlet holes 30 (Figs. 7, 8).

The connection of the second and third working zones the upper part 2 and 3 can be implemented at the center of the outer surface of the base of the second working zone and the outer surface of the upper part of the third working zone, respectively, to form a cavity in the form of a horizontally oriented channel having a variable shape and size (Fig. 2) or to form a gap having a variable shape and size between the second and third working zones 2 and 3 (Fig. 5). This cavity in the form of the horizontally oriented channel or the gap is designed to provide a contact of the filler 41 of the second working zone 2 with a filler 42 of the third working zone 3 in order to retain properties of the filler 42 of the third working zone 3 during the service life of the filtering module (Figs. 2, 5).

According to the group of inventions, the housing 22 of the third working zone 3 can be embodied as indecomposable (not shown in the Figures), where the lower part 21 and the upper part 20 are ultrasonically welded to each other and made of propylene Moplen HP500N (LyondellBasell). Use of the third working zone 3 in the form of the indecomposable structure makes it impossible to replace the filler 42. Use of the composite structure (Fig. 7, 8) enhances the ability of a customer to use the present structure and allows the customer to replace the filler 42 of the third working zone 3. In doing so, one type of the filler, for example, a mineralizing material (Fig. 1, 3, 6) is used as the filler 42. Alternatively, at least two types of fillers are used, said filler being a system of fillers arranged layer-by-layer, for example, horizontally and/or vertically, with a predetermined thickness of each layer, which makes it possible to correct a composition of the filtered drinking water depending upon a composition of a source water by selection of mineralizing materials and a thickness for a layer thereof. For example, magnesium and/or calcium compound-based materials, for example, dolomite (Hebei Chida Manufacture and Trade Co., China), calcite, magnesium carbonate, calcium carbonate, magnesium silicate, magnesium chloride, magnesium oxide, mixtures thereof or a mixture comprising a magnesium/calcium oxide - of natural origin or produced by heat treatment of natural materials - or metal magnesium and/or calcium and alloys thereof, are used as the mineralizing material.

According to the present group of inventions, the third working zone 3 can be embodied in a complicated configuration wherein the inner space of the third working zone 3 can be divided, for example, into four sectors 29 (Fig. 8) each being embodied, for example, in the form of a triangle with a number n of fastening members 26 (Fig. 7) arranged on each sector. At the same time, a side wall of each sector is provided with a row of vertical openings 31 (Fig. 8) to provide a contact of the treated liquid and/or a mixture of the treatable liquid and the treated liquid, as present in the liquid purification device, with the filler 42 of the third working zone. Division of the third working zone 3 into several sectors 29 will allow use of various fillers 42, for example mineralizing agents depending upon requirements imposed upon the produced water.

In a particular embodiment, according to the group of inventions, the filtering module, consisting of the first, second and third working zones 1, 2 and 3 can be integral, where at least the second and third working zones 2 and 3 are arranged in one housinge (Figs. 3 ,6), wherein the third working zone 3 is separated from the second working zone 2 by a low fixing means (Figs. 3, 6) for the filler 41 and consists of an upper part 20 and a lower part 21 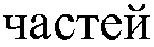 , where the lower part 21 is filled with the filler 42 (Figs. 3, 6) while the upper part 20 of the third working zone is a cavity of a variable shape and size, not filled with the filler. The third working zone is also embodied in a complicated configuration with an inner space embodied in the form of at least one sector of a predetermined shape, for example as shown in Fig. 8, and consists of four sectors 29, wherein a vertical wall and a base of a sector have liquid outlet holes. Just as in the previous embodiments, the inner space of at least one sector comprises at least two types of fillers being a system of fillers arranged layer-by-layer, for example, horizontally and/or vertically, with a predetermined thickness of each layer, or comprises one type of the filler.

At completion of forming the first, second and third working zones 1, 2 and 3 (Figs. 3, 6), a lid 32 is fixed on the housing of the module, for example, by a latch 33 (Figs. 3, 6) or a rubber seal (not shown in the Figures). In such a case, the third working zone 3 is an indecomposable part of the filtering module, which is also embodied in a complicated configuration and is divided, for example, into four sectors of a predetermined shape, with outlet holes 31 in vertical walls and filterable liquid outlet holes 23 in the base (Figs. 3, 6). In assemblage of such a module as the filler 42 in the third working zone 3, it is preferable to use mineralizing materials. Alternatively, a system of filters is used, said fillers being arranged layer-by-layer, for example, horizontally and/or vertically, with a predetermined thickness of each layer (not shown in the Figures).

The loading of the module begins with formation of the third working zone 3 followed by installation of the lower fixing means 34 (Figs. 3, 6) for the filler 41 of the second working zone 2. Then, the second working zone 2 is wormed which predominantly consists of fibrous and granulated materials of a mixture thereof. In doing so, a gap according to the group of inventions is formed between the lower part 21 of the third working zone 3 filled with the filler 42 and with the lower fixing means 34 (Figs. 3, 6) for the filler 42. After formation of the second working zone 2, the fixing means 12 for the filler 42 of the second working zone 2 is installed followed by insertion of a piece 35 embodied in the form of the channel 7 with the base 9 and formation of the first working zone 1 (Fig. 6). Granulated ion-exchange materials or, for example, a mixture of granulated and fibrous materials is predominantly used as the filler 40 of the first working zone 1. The lid 32 can be fastened, for example, by the special latch 33 (Figs. 3, 6) or a thread connection (not shown in the Figures) 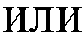 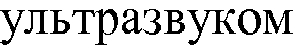 (not shown in the Figures).

Fig. 10 illustrates the general cross-sectional view of the liquid purification device with the filtering module, for example, according to the second embodiment. The device consists of the filterable water container 36 in the form of a funnel and a filtered water container 37 OT of the filtered water in the form of a pitcher, said containers communicating with each other via a filtering module 38 (Fig. 10) according to the present invention.

The filtering module of the liquid purification device operates as follows. A faucet water is poured into the filterable water container 36 of the liquid purification pitcher-type device wherein the claimed filtering module 38 according to any one of the claimed embodiments (Fig. 10). When subjected to gravitational forces, the water initially flows through the first working zone 1, then flows through the second working zone 2, and finally flows through the third working zone 3 (Fig. 1), and is accumulated within the filtered water container 37 in the form of a pitcher (Fig. 10).

In progress of filtration, the water flows through the liquid inlet holes 6 and air outlet holes into the first working zone 1 (Figs. 1, 4). The first working zone 1 of the filtering module according to the first embodiment is inactive, the water flows free through the fixing means 12 for the filler 41 arranged between the first and second working zones 1 and 2, and fills the inner space of the second working zone 2. as the filterable water flows through the filler 41 in the second working zone 2, the air initially present, for example in a fibrous filtering material and forming bubbles able to reduce a speed of water flowing through the module begins bleeding. To remove the air bubbles out of the second working zone 2, the fixing means 12 for the filler 41 is installed between the first and second working zones 1 and 2 and is provided with the valve 14 (Figs. 3, 6) like in the prototype. Owing to the presence of valves 14 in various configurations (not shown in the Figures), the filtration process is carried out according to the present invention. The second working zone 2 is usually filled with fillers whose selection is determined by final parameters of the filtered water. According to the present invention, for example, a mixture of fibrous and granulated materials is used as the filler 41 in the second working zone 2 where, for example, ion-exchange fiber-based sorbents are used as the fibrous material while an activated carbon or predominantly a mixture of the activated carbon and an ion-exchange resin is used as the granulated material. Such a combination of the filler 41 promotes partial softening of the filtered water and provides for removal of chlorine, organic compounds, heavy metals from the drinking water. The filtered water exits the second working zone 2 through the outlet holes 15 in the base (Fig. 9), and in an embodiment according to the present invention, enters the cavity in the form of a horizontally oriented channel 18 having a variable shape and size (Figs. 1, 4). At the next step, the treatable liquid enters the third working zone 3 and at least partially cooperates with the filler 42 of the third working zone 3, because a portion of the filtered water exits the second working zone 2, passes through the outlet holes 30 (Fig. 8) arranged in the upper part of the third working zone 3. Alternatively, a portion of the filtered water enters third working zone 3 through the gap between of the second and of third working zones 2 and 3, while another portion of the filtered water exits through a gap at an edge of the side wall of the second working zone 2 and bypasses the third working zone (Figs. 2, 5). Alternatively, a portion of the filtered water passes through the cavity 20 and goes out through the upper part of the outlet holes 31 without a contact with the filler 42 into the filtered water container, for example, in the form of a pitcher, while another portion of the filtered water is saturated with minerals when contacts the filler 42 and exits the lower part of the third working zone 3 into the filtered water container already in a mineralized form. Such a structural embodiment allows mineralization of the filtered water up to predetermined parameters. According to the present invention, for example, mineralizing materials capable of being dissolved in water, for example, magnesium and/or calcium compound-based materials, for example, dolomite, calcite, magnesium carbonate, calcium carbonate, magnesium silicate, magnesium chloride, magnesium oxide, mixtures thereof or a mixture comprising a magnesium/calcium oxide - of natural origin or produced by heat treatment of natural materials - or natural materials subjected to heat treatment or metal magnesium and/or calcium and alloys thereof, are used as the filler 42 of the third working zone 3. As described above, the third working zone 3 can a composite one (Figs. 7, 8) or an indecomposable one (not shown in the Figures), which has no effect upon the claimed technical result. An embodiment of the housing 22 (Fig. 2) of the third working zone 3 as a composite structure (Figs. 7, 8) aims to improve the performance functionality of the module. The structure of the housing 22 of the third working zone 3 is embodied with the outlet holes 23, 24 and 31 (Fig. 8) smaller than a granule size of the filler 42 of the third working zone 3. According to the claimed group of inventions, the housing 22 of the third working zone 3 is embodied, for example, with four sectors 29 (Fig. 8). The treated water exits the third working zone 3 through the liquid outlet holes 31 and 23 (Fig. 8) arranged in a vertical wall and a base, respectively, of each sector 29. According to the present invention, the filler 42 having different properties and placed in different sectors 29 or at least two types of fillers presenting a system of fillers arranged layer-by-layer, for example, horizontally and/or vertically, with a predetermined thickness of each layer, can be used in the third working zone 3.

The third working zone 3 is filled with the filler 42, wherein an upper level of the filler 42 is lower than a level of the treated water in the filtered water container 37 in the form of a pitcher when the liquid filtration terminates, which promotes further enrichment of the filtered water, for example, with mineral matters. In progress of filtration, the water is accumulated in the filtered water container 37 in the form of the pitcher where the third working zone 3 as such is arranged so as to provide a contact of the treated liquid with the filler 42 of the third working zone 3. In a particular embodiment, the first working zone 1 can further comprise a filler (not shown in the Figures).

The filtering module according to the second embodiment is characterized by the presence of three active zones having an influence upon variation in a chemical composition of the treatable drinking water. The first working zone 1 filled with the filler 40 provides for softening and acidification of the treatable water, which has a positive effect upon further treatment of the water by passing it through the filler 42 of the third working zone 3. In progress of filtration, the water flows through the upper and side inlet holes 6 into the first working zone 1 and cooperates with the filler 40 of the first working zone 1 (Fig. 4). The water flows into the second working zone of the filtering module through the fixing means 12 arranged between the first and second working zones 1 and 2 of the module. The air present, for example, in the fibrous filtering material is upwardly expelled by the filterable liquid out of the module, and the filtration process is carried out according to the present invention due to the presence of the valve 14 in the fixing means 12, said valve operating in coordination with the channel 7 of the first working zone 1 (Figs. 4, 6). Similarly to the first embodiment, the filler 41 of the second working zone 2 provides for a predetermined quality of the drinking water filtration. The water flows through the inlet holes 15 of the second working zone 2 (Fig. 9) and into the third working zone 3, for example, through the horizontally oriented channel 18 of a predetermined shape and size (Figs. 1, 4).

Thus, use of the filtering module according to the second embodiment provides for three-stage treatment of the drinking water, wherein the liquid softening takes place at the first stage, the filtration and removal of chlorine, organic compounds and heavy metals take place at the second stage, and the mineralization of the liquid takes place at the third stage so as to provide a contact of at least a portion of the treatable liquid with the filler 42 of the third working zone 3.

According to the claimed group of inventions, for example, a readily soluble mineralizing material is used as the filler 42 of the third working zone 3. It is extremely undesirable if such a material touches the fibrous filler 41 of the second working zone 2 upon completion of the filtration process, because this results in softening of the mineralizing material and fast dissolution of the latter or deterioration in properties of the filler 42. In order to retain the properties of the filler 42 of the third working zone 3 during the service life of the module, the cavity in the form of the horizontally oriented channel 18 having a variable shape and size (Fig. 1, 4) is formed in the claimed module between the outer surface of the base 19 of the second working zone 2 and the outer surface of the upper part 20 of the third working zone 3, or the gap presents between the second and third working zones 2 and 3.

According to the claimed group of inventions, as disclosed above, the filtering module can be molded entirely, and then the lid 32 can be installed on the housing of the module by means of the latch 33 (Figs. 3, 6). With such an embodiment of the filtering module, the liquid will flow through all three working zones, as disclosed above. However, to retain the properties of the filler 42 of the third working zone 3 during the service life of the module in order to provide for ventilation between of the second and third working zones 2 and 3, a charge of a mineralizing composition should be fixed and should not occupy more than a half space designed for the third working zone 3 (Figs. 3, 6). The filtering module embodiment according to the second embodiment is fixed within the filterable water container 36 (Fig. 10) of the liquid purification device, for example, by a sealing ring 39 (Fig. 6).

Filtering module according to the present invention can be used to produce a filtered brackish drinking water; in other words, the structural embodiments of the group of inventions allow improvement in the functionality of the module.

The skilled persons can select particular dimensions and individual structural parameters in embodiments of the filtering module depending upon the purpose and productivity of the liquid purification device.

The filtering module of the invention can be manufactured in the machine for injection molding of thermoplastic materials, for example, can be made of polypropylene.

The present description deals with the preferred embodiments of the group of inventions. Persons skilled in the art will understand the disclosure and description; various modifications in the form and details are possible within the essence and scope of the claimed invention.

## Claims

1. A filtering module of a liquid purification device, consisting of two working zones and at least one fixing means, wherein a first working zone is made with liquid inlet and air outlet holes while a second working zone is filled with a filler and is provided with at least one outlet hole in a base, said module being **characterized in that** it is embodied in assembly with a third working zone comprising at least one type of the filler and arranged downstream of the second working zone so as to provide a contact of at least a portion of a treatable liquid with the filler of the third working zone and retain properties of the filler in the third working zone during a service life of the module.

2. The filtering module according to claim 1, **characterized in that** the third working zone consists of upper and lower parts, where the lower part is filled with at least one type of the filler.

3. The filtering module according to claim 2, **characterized in that** an outer surface of a base of the second working zone and an outer surface of the upper part of the third working zone, respectively, have at least one portion at a center of said surfaces, said portion being designed to connect the second working zone to the third working zone.

4. The filtering module according to claim 3, **characterized in that** a cavity in the form of a horizontally oriented channel having a variable shape and size is formed between the outer surface of the base of the second working zone and an outer surface of the upper part of the third working zone.

5. The filtering module according to claim 2, **characterized in that** the lower part of the third working zone is embodied, for example, in the form of a housing having a complicated configuration with an inner space embodied in the form of at least one sector of a predetermined shape, wherein a vertical wall and a base of a sector have liquid outlet holes.

6. The filtering module according to claim 5, **characterized in that** the inner space of at least one sector comprises at least two types of fillers being a system of fillers arranged layer-by-layer, for example, horizontally and/or vertically, with a predetermined thickness of each layer.

7. The filtering module according to claim 6, **characterized in that** granulated and/or powder and/or composite materials are used as the filler.

8. The filtering module according to claim 2, **characterized in that** the upper part of the third working zone is embodied, for example, in the form of a lid with liquid inlet and outer holes.

9. The filtering module according to claim 4, **characterized in that** the lower part of the third working zone is connected to the upper part of the third working zone by a fastening means.

10. The filtering module according to claim 9, **characterized in that** the fastening means presents a number n of fastening members arranged on the lower part of the third working zone and a respective number of holes arranged in the upper part of the third working zone where the fastening members are introduced in and which together form the fastening means of the lower part and the upper part of the third working zone.

11. The filtering module according to claim 3, **characterized in that** the third working zone is connected to the second working zone at a center to form a gap of a variable shape and size between the second and third working zones.

12. The filtering module according to claim 11, **characterized in that** the third working zone is embodied, for example, in the form of a housing having a complicated configuration with an inner space embodied in the form of at least one sector of a predetermined shape, wherein a vertical wall and a base of a sector have liquid outlet holes.

13. The filtering module according to claim 12, **characterized in that** the inner space of at least one sector comprises at least two types of fillers being a system of fillers arranged layer-by-layer, for example, horizontally and/or vertically, with a predetermined thickness of each layer.

14. The filtering module according to claim 13, **characterized in that** granulated and/or powder and/or composite materials are used as the filler.

15. The filtering module according to claim 1, **characterized in that** at least the second and the third working zones are arranged within one housing, wherein the third working zone is separated from the second working zone by a fixing means for a filler and consists of upper and lower parts, where the lower part of the third working zone is filled with at least one type of the filler while the upper part of the third working zone is a cavity of a variable shape and size, not filled with the filler.

16. The filtering module according to claim 15, **characterized in that** the third working zone is embodied in a complicated configuration with an inner space embodied in the form of at least one sector of a predetermined shape, wherein a vertical wall and a base of a sector have liquid outlet holes.

17. The filtering module according to claim 16, **characterized in that** the inner space of at least one sector comprises at least two types of fillers being a system of fillers arranged layer-by-layer, for example, horizontally and/or vertically, with a predetermined thickness of each layer.

18. The filtering module according to claim 17, **characterized in that** granulated and/or powder and/or composite materials are used as the filler.

19. The filtering module according to claim 1, **characterized in that** the module consisting of the first, second and third working zones is integral.

20. The filtering module according to claim 1, **characterized in that** the third working zone in the module is a replaceable working zone.

21. The filtering module according to claim 1, **characterized in that** the first working zone further comprises a filler.

22. The filtering module according to claim 21, **characterized in that** a granulated material, predominantly an ion-exchange resin or a mixture of an ion-exchange resin and an activated carbon, is used as the filler of the first working zone.

23. The filtering module according to claim 1, **characterized in that** a mixture of fibrous and granulated materials is used as the filler in the second working zone.

24. The filtering module according to claim 23, **characterized in that** ion-exchange fiber-based sorbents are used as the fibrous material while the activated carbon or predominantly the mixture of the activated carbon and the ion-exchange resin is used as the granulated material.

25. The filtering module according to claim 1, **characterized in that** granulated and/or powder and/or composite materials are used as the at least one type of the filler in the third working zone.

26. The filtering module according to claim 25, **characterized in that** a mineralizing material is predominantly used as the granulated and/or powder material.

27. The filtering module according to claim 25, **characterized in that** a mixture of the mineralizing material and the activated carbon is used as the granulated or powder material.

28. The filtering module according to claim 26 or 27, **characterized in that** magnesium and/or calcium compound-based materials, for example, dolomite, calcite, magnesium carbonate, calcium carbonate, magnesium silicate, magnesium chloride, magnesium oxide, mixtures thereof or a mixture comprising a magnesium/calcium oxide - of natural origin or produced by heat treatment of natural materials - or metal magnesium and/or calcium and alloys thereof, are used as the mineralizing material.

29. The filtering module according to claim 25, **characterized in that**, for example, a carbon block is used as the composite material.

30. The filtering module according to claim 21, **characterized in that** the fillers of the first, second and third working zones do not cooperate with each other.

31. The filtering module of liquid purification device, consisting of two working zones and at least one fixing means, where a first working zone is made with liquid inlet and air outlet holes while a second working zone is filled with a filler and is provided with at least one outlet hole in a base, said module being **characterized in that** it is embodied in assembly with a third working zone comprising at least one type of the filler and arranged downstream of the second working zone so as to provide a contact of at least a portion of a treatable liquid with the filler of the third working zone and retain properties of the filler in the third working zone during a service life of the module, where the first working zone comprises a filler.

32. The filtering module according to claim 31, **characterized in that** the third working zone consists of upper and lower parts, where the lower part is filled with at least one type of the filler.

33. The filtering module according to claim 32, **characterized in that** an outer surface of a base of the second working zone and an outer surface of the upper part of the third working zone, respectively, have at least one portion at a center of said surfaces, said portion being designed to connect the second working zone to the third working zone.

34. The filtering module according to claim 33, **characterized in that** a cavity in the form of a horizontally oriented channel having a variable shape and size is formed between the outer surface of the base of the second working zone and an outer surface of the upper part of the third working zone.

35. The filtering module according to claim 32, **characterized in that** the lower part of the third working zone is embodied, for example, in the form of a housing having a complicated configuration with an inner space embodied in the form of at least one sector of a predetermined shape, wherein a vertical wall and a base of a sector have liquid outlet holes.

36. The filtering module according to claim 35, **characterized in that** the inner space of at least one sector comprises at least two types of fillers being a system of fillers arranged layer-by-layer, for example, horizontally and/or vertically, with a predetermined thickness of each layer.

37. The filtering module according to claim 36, **characterized in that** granulated and/or powder and/or composite materials are used as the filler.

38. The filtering module according to claim 32, **characterized in that** the upper part of the third working zone is embodied, for example, in the form of a lid with liquid inlet and outlet holes.

39. The filtering module according to claim 34, **characterized in that** the lower part of the third working zone is connected to the upper part of the third working zone by a fastening means.

40. The filtering module according to claim 39, **characterized in that** the fastening means presents a number n of fastening members arranged on the lower part of the third working zone and a respective number of holes arranged in the upper part of the third working zone where the fastening members are introduced in and which together form the fastening means of the lower part and the upper part of the third working zone.

41. The filtering module according to claim 33, **characterized in that** the third working zone is connected to the second working zone at a center to form a gap of a variable shape and size between the second and third working zones.

42. The filtering module according to claim 41, **characterized in that** an inner space of at least one sector comprises at least two types of fillers being a system of fillers arranged layer-by-layer, for example, horizontally and/or vertically, with a predetermined thickness of each layer.

43. The filtering module according to claim 42, **characterized in that** granulated and/or powder and/or composite materials are used as the filler.

44. The filtering module according to claim 31, **characterized in that** where at least the second and third working zones are arranged in one housing, wherein the third working zone is separated from the second working zone by a fixing means for a filler and consists of upper and lower parts, where the lower part of the third working zone is filled with at least one type of the filler while the upper part of the third working zone is a cavity of a variable shape and size, not filled with the filler.

45. The filtering module according to claim 44, **characterized in that** the third working zone is embodied in a complicated configuration with an inner space embodied in the form of at least one sector of a predetermined shape, wherein a vertical wall and a base of a sector have liquid outlet holes.

46. The filtering module according to claim 45, **characterized in that** the inner space of at least one sector comprises at least two types of fillers being a system of fillers arranged layer-by-layer, for example, horizontally and/or vertically, with a predetermined thickness of each layer.

47. The filtering module according to claim 46, **characterized in that** granulated and/or powder and/or composite materials are used as the filler.

48. The filtering module according to claim 31, **characterized in that** the module consisting of the first, second and third working zones is integral.

49. The filtering module according to claim 31, **characterized in that** the third working zone in the module is a replaceable working zone.

50. The filtering module according to claim 31, **characterized in that** a granulated material, predominantly an ion-exchange resin or a mixture of an ion-exchange resin and an activated carbon, is used as the filler of the first working zone.

51. The filtering module according to claim 31, **characterized in that** a mixture of fibrous and granulated materials is used as the filler in the second working zone.

52. The filtering module according to claim 51, **characterized in that** wherein ion-exchange fiber-based sorbents are used as the fibrous material while the activated carbon or predominantly the mixture of the activated carbon and the ion-exchange resin is used as the granulated material.

53. The filtering module according to claim 31, **characterized in that** granulated and/or powder and/or composite materials are used as the at least one type of the filler in the third working zone.

54. The filtering module according to claim 53, **characterized in that** a mineralizing material is predominantly used as the granulated and/or powder material.

55. The filtering module according to claim 53, **characterized in that** a mixture of the mineralizing material and the activated carbon is used as the granulated or powder material.

56. The filtering module according to any one of claims 54 or 55, **characterized in that** magnesium and/or calcium compound-based materials, for example, dolomite, calcite, magnesium carbonate, calcium carbonate, magnesium silicate, magnesium chloride, magnesium oxide, mixtures thereof or a mixture comprising a magnesium/calcium oxide - of natural origin or produced by heat treatment of natural materials - or metal magnesium and/or calcium and alloys thereof, are used as the mineralizing material.

57. The filtering module according to claim 53, **characterized in that**, for example, a carbon block is used as the composite material.

58. The filtering module according to claim 31, **characterized in that** the fillers of the first, second and third working zones do not cooperate with each other.
